# FASCICULE DE BREVET EUROPEEN

(11) **EP 0 603 066 B1**
(45) Date de publication et mention de la délivrance du brevet: **02.09.1998**
(21) Numéro de dépôt: 93403032.1
(22) Date de dépôt: 15.12.1993
(51) Int. Cl.: B29C 44/00, B29B 11/16

(54) **Procédé de fabrication de liaisons en matériau composite de structures en forme de treillis ou d'éléments de treillis, et treillis obtenus par ce procédé**
Verfahren zum Herstellen von Verbundverbindungen für fachwerkartige Struktur oder Fachwerkteile, und so hergestellte Fachwerke
Method for the manufacture of composite joints for framework structures or framework elements, and frameworks obtained by this method

(30) Priorité: 17.12.1992 FR 9215235
(43) Date de publication de la demande: 22.06.1994
(73) Titulaire: EUROCOPTER, F-13725 Marignane Cédex (FR)
(72) Inventeur: Gautier, André, F-13840 Rognes (FR)
(74) Mandataire: Poulin, Gérard

(56) Documents cités:
- EP-A- 0 465 399
- EP-A- 0 475 883
- FR-A- 2 675 732
- GB-A- 2 225 277
- GB-A- 2 254 821

## Description

L'invention concerne un procédé permettant de fabriquer des liaisons en matériau composite de structures comportant au moins deux barres reliées entre elles par au moins un noeud de liaison, de façon à former un treillis ou un élément de treillis.

L'invention concerne également un treillis obtenu par la mise en oeuvre de ce procédé.

L'expression "treillis" désigne ici un assemblage d'au moins deux barres reliées entre elles par des noeuds de liaison, de façon à former entre les barres une ou plusieurs mailles, ouvertes ou fermées par une peau.

Par ailleurs, l'expression "élément de treillis" désigne une structure élémentaire comprenant deux barres reliées entre elles par un noeud de liaison.

Les structures de type treillis obtenues par la mise en oeuvre du procédé selon l'invention peuvent être utilisées dans de nombreux secteurs industriels tels que l'aviation et l'automobile. Ainsi, dans l'industrie aéronautique, on peut utiliser ces structures comme châssis de verrières de postes de pilotage ou comme cadres de portes, par exemple sur les hélicoptères ou encore sur certains avions.

Dans l'état actuel de la technique, il existe différents procédés permettant de fabriquer des structures de type treillis qui soient à la fois rigides et légères et puissent présenter les différentes géométries imposées par les nombreuses applications concernées par ce type de structures.

Une solution connue consiste à utiliser des profilés métalliques minces ou des éléments métalliques formés de tôles minces embouties, assemblés par soudage, par collage, par rivetage ou par tout autre procédé classique.

Une autre solution connue consiste à utiliser des éléments en matériau composite, obtenus par thermoformage ou par rotomoulage, et à les assembler par collage ou par soudage.

Une autre technique connue consiste à réaliser des éléments en matériau composite par drapage ou par bobinage et à relier ces éléments entre eux par des noeuds de liaison métalliques, la liaison entre les éléments en matériau composite et les noeuds de liaison métalliques étant obtenue soit par drapage de matériaux composites sur les noeuds de liaison et au moins en partie sur les barres, soit par collage des barres aux noeuds de liaison. De telles liaisons ne présentent pas une garantie de continuité des matériaux qui les constituent sur l'ensemble de leurs pourtours, d'une barre à l'autre.

Tous ces procédés de fabrication nécessitent des outillages complexes et de grande précision afin de réaliser les sous éléments constitutifs de la structure finale en forme de treillis, puis d'autres outillages complexes et de grande précision afin de réaliser l'assemblage en série de ces sous éléments tout en garantissant une bonne reproductibilité des formes.

De plus, afin de répondre aux exigences de rigidité des structures en treillis que l'on désire réaliser, il est souvent nécessaire d'avoir recours à des renforts locaux, tels que des goussets métalliques ou des renforts sélectifs en stratifié à base de fibres à haute résistance, pour augmenter localement la courbure. Dans le cas de la troisième technique connue citée précédemment, mettant en oeuvre des opérations de drapage, la réalisation de tels renforts locaux dans des structures non développables nécessite de disposer dans ces structures des éléments séparés de renfort textile, qu'il convient de couper, de mettre en place et de superposer de manière à fournir un renfort correspondant à la forme finale de la structure à réaliser. Cependant, les découpes qui doivent alors être effectuées dans les éléments de renfort textile introduisent des discontinuités dans les fibres, ce qui entraîne, de plus, des zones locales de moindre résistance dans la structure en matériau composite ainsi réalisée. Pour des raisons de sécurité, ceci est tout à fait inacceptable dans un certain nombre d'applications telles que les applications aéronautiques. En outre, ces opérations de découpe sont longues et coûteuses et leur mise en oeuvre présente une reproductibilité et une fiabilité relativement limitées.

Par ailleurs, il est connu du document GB-A-2 254 821 de fabriquer une cabine de véhicule par moulage, par transfert de résine. Les bords des panneaux de la cabine comportent des barres renforcées par des inserts formés de fibres noyées dans une matière plastique expansée.

L'invention a précisément pour objet un procédé permettant de réaliser des liaisons en matériau composite de structures, telles que des treillis ou des éléments de treillis, qui soient légères et résistantes, ce procédé ne présentant pas les inconvénients des techniques connues et autorisant notamment une mise en oeuvre simple, peu coûteuse et répétitive, et garantissant la continuité des fibres de renfort sur l'ensemble de la liaison ainsi réalisée.

Conformément à l'invention, ce résultat est obtenu au moyen d'un procédé de fabrication de liaisons en matériau composite, formées de fibres noyées dans une matrice de résine thermodurcie, de structures comportant au moins deux barres reliées entre elles par au moins un noeud de liaison, caractérisé par le fait qu'il comprend les étapes suivantes :
- réalisation de premières ébauches de barres, à la forme finale de ces barres ;
- réalisation d'au moins une deuxième ébauche de noeud de liaison creux, à la forme finale de ce noeud mais non imprégnée d'une résine d'assemblage auxdites barres, par :
   - mise en place et compression d'un complexe textile plan formé de fibres textiles tissées préformables à chaud, entre une empreinte creuse d'un moule de conformage et un contre-moule complémentaire de cette empreinte creuse ;
   - rabattement de parties de recouvrement du complexe textile sur le contre-moule, avec interposition d'un film séparateur entre les parties de recouvrement superposées, de façon à encercler totalement le contre-moule sans aucune ligne d'interruption ;
   - fermeture étanche du moule et exécution d'un cycle de préformage du complexe textile préservant l'intégrité du film séparateur, afin d'obtenir la deuxième ébauche ;
   - démoulage de cette deuxième ébauche ;
- assemblage des premières et deuxième ébauches, par moulage par injection de résine thermodurcissable.

Pour la mise en oeuvre de ce procédé, on utilisera avantageusement comme fibres textiles préformables à chaud les fibres à haute déformabilité commercialisées sous forme tissée par la Société BROCHIER S.A. sous l'appellation commerciale "INJECTEX" (Marque Déposée). Ces tissus peuvent notamment être formés de fibres de carbone, de verre, d'aramide, ou de fibres d'aramide et de carbone ou de verre et de carbone. Ces fibres se caractérisent par le fait qu'elles ont subi un traitement chimique de nature thermodurcissable et réactivable qui donne au tissu, à température ambiante, une certaine rigidité facilitant sa manipulation et sa découpe, tout en facilitant son assemblage et sa mise en forme lorsqu'il est chauffé entre environ 80°C et environ 100°C. En outre, après le préformage du produit, le traitement des fibres confère à nouveau au tissu une rigidité suffisante pour permettre sa manipulation et sa découpe, notamment par des moyens automatiques. Par ailleurs, le traitement subi par les fibres est compatible avec la résine thermodurcissable formant la matrice du matériau composite à réaliser et s'intègre dans un cycle classique de polymérisation à chaud. Enfin, le traitement de préformage subi par les fibres ne modifie pas la perméabilité des tissus, nécessaire ultérieurement à leur imprégnation par la résine d'assemblage du noeud aux barres.

Par ailleurs, la technique de moulage par injection de résine thermodurcissable utilisée dans l'assemblage des premières et deuxième ébauches est une technique de moulage connue sous la désignation RTM (de l'anglais "Resin Transfer Molding"). Cette technique de moulage, qui concerne principalement les matériaux à matrice thermodurcissable, permet d'obtenir des pièces de performances moyennes à élevées. Le taux volumique des fibres peut atteindre 60 %. Le principe de cette technique consiste à injecter sous pression de la résine fluide dans des fibres textiles prédisposées dans un moule fermé. Le moule est disposé dans une presse chauffante ou dans une étuve, ou encore il est équipé d'un système de chauffage permettant la cuisson de la résine. Ce procédé est bien adapté à la fabrication de pièces de petites et moyennes séries en une seule étape. Il autorise l'implantation d'inserts, donne à la structure obtenue un bon aspect de surface et assure une très bonne reproductibilité, tout en ne nécessitant qu'un faible niveau d'investissement.

Il est à noter que le procédé de fabrication selon l'invention permet de diminuer, voire de supprimer les classiques opérations de découpe pendant l'exécution du procédé et peut être utilisé pour réaliser des liaisons et des renforts à surface non développables et, par conséquent, quelles que soient les formes données aux barres et aux noeuds de liaison. Ainsi, les barres peuvent être creuses ou non et présenter une section quelconque, constante ou variable. De plus, les barres peuvent être gauches ou vrillées, ou au contraire de forme régulière.

Par ailleurs, les noeuds de liaison peuvent être creux ou non et relier deux barres ou plus, creuses ou non, et ces barres peuvent selon le cas être coplanaires ou non.

Avantageusement, on réalise le complexe textile plan en superposant au moins deux couches de tissus de fibres textiles préformables à chaud, les fibres de l'une de ces couches étant orientées à environ 0° et 90° par rapport à l'axe longitudinal de l'une des barres (généralement la barre la plus sollicitée en traction-compression), et les fibres de l'autre couche étant orientées à environ + 45° et - 45° par rapport à cet axe longitudinal de façon à constituer, par exemple, un matériau dit quasi-isotrope. Lorsqu'il est nécessaire de renforcer le noeud de liaison dans une direction donnée, on place au moins une série de fibres textiles selon cette direction, entre les deux couches de tissus préformables à chaud.

Dans une forme de réalisation préférée de l'invention, le cycle de préformage comprend une étape de chauffage à une température d'environ 100°C sous une dépression d'environ 0,7 bar, pendant une durée voisine de 10 mn, suivie d'une étape de refroidissement, en maintenant cette dépression.

Dans un premier mode de réalisation de l'invention, on réalise les premières ébauches par tissage d'au moins trois ensembles de fibres textiles orientées selon trois directions différentes, par exemple à environ - 45°, 0° et + 45° par rapport à l'axe longitudinal d'un noyau fusible apte à être détruit lors de l'étape d'assemblage des ébauches, et autour duquel on tisse ces trois ensembles de fibres. Ce noyau fusible présente alors extérieurement la forme intérieure de la barre creuse à réaliser.

Dans une variante de ce premier mode de réalisation, le noyau n'est pas fusible, mais reste en place pour assurer une stabilité des revêtements formés par les fibres textiles.

Selon une deuxième forme de réalisation de l'invention, on réalise les premières ébauches à partir d'un autre complexe textile plan formé de fibres textiles préformables à chaud, selon un procédé identique à celui permettant de réaliser la deuxième ébauche.

L'invention a aussi pour objet un treillis en matériau composite, caractérisé par le fait qu'il comprend un ensemble de barres reliées par des noeuds de liaison, ce treillis étant fabriqué par le procédé défini précédemment.

Lorsque le procédé est utilisé pour fabriquer des structures en treillis dans lesquelles les barres reliées par les noeuds de liaison forment des mailles dont l'une au moins est obturée par une peau en fibres textiles noyée dans une matrice de résine thermodurcie, on assemble simultanément les fibres textiles de cette peau et les premières et deuxième ébauches lors de l'opération de moulage par injection de résine thermodurcissable.

On décrira à présent, à titre d'exemple non limitatif, un mode de réalisation préféré de l'invention en se référant aux dessins annexés, dans lesquels :
- la figure 1 est une vue en perspective éclatée représentant un complexe textile plan placé entre l'empreinte d'un moule de conformage et un contre-moule, de façon à illustrer l'une des étapes de réalisation d'une ébauche d'un noeud de liaison dans le procédé de fabrication selon l'invention ;
- la figure 2 est une vue en perspective représentant une étape ultérieure de découpe des parties de recouvrement du complexe textile, lors de la fabrication de l'ébauche d'un noeud de liaison ;
- la figure 3 est une vue en perspective illustrant l'assemblage de l'ébauche de noeud de liaison et de deux ébauches de barres ;
- les figures 4A à 4G sont des vues en perspective illustrant schématiquement différentes formes de structures élémentaires en matériau composite aptes à être fabriquées selon le procédé de l'invention ; et
- la figure 5 est une vue en perspective représentant un châssis de verrière de poste de pilotage d'un hélicoptère apte à être fabriqué selon le procédé de l'invention.

Le procédé de fabrication selon l'invention permet de réaliser de manière originale des liaisons en matériau composite de structures présentant la forme d'un treillis complexe ou d'un élément de treillis. Dans ce dernier cas, la structure comprend au moins deux barres reliées entre elles par un noeud de liaison. Dans le cas de la fabrication d'un treillis complexe, la structure peut comprendre un nombre quelconque de barres reliées entre elles par une pluralité de noeuds de liaison, de façon à former entre les barres des mailles de forme quelconque, coplanaires ou non, pleines ou creuses.

Pour fabriquer de telles structures, on réalise séparément des ébauches de barres, en matériau composite ou non, et des ébauches de noeuds de liaison en matériau composite, constituant des produits semi-finis. Les ébauches des noeuds de liaison et éventuellement celles des barres sont formées de fibres textiles mises à la forme désirée, mais dans lesquelles la résine d'imprégnation n'a pas encore été introduite. Lorsque les ébauches sont terminées, elles sont assemblées en utilisant le procédé connu de moulage par injection de résine thermodurcissable. On réalise ainsi simultanément la matrice de résine thermodurcie de la structure et la liaison des ébauches fabriquée précédemment.

En ce qui concerne les ébauches des barres en matériau composite, elles sont réalisées de préférence par tissage d'au moins trois ensembles de fibres textiles orientés selon trois directions différentes, autour d'un noyau éventuellement fusible et, dans ce cas, apte à être détruit par chauffage et présentant extérieurement la forme intérieure de la barre à réaliser. Le noyau fusible peut notamment être réalisé en un matériau alvéolaire léger et rigide, précédemment mis en forme par tout procédé classique d'usinage ou de moulage. Les trois ensembles de fibres textiles qui sont tissés sur le noyau peuvent notamment être orientés à environ - 45°, 0° et + 45° par rapport à l'axe longitudinal du noyau fusible.

Selon une variante de réalisation, les ébauches des barres peuvent aussi être fabriquées selon un procédé comparable à celui qui sera décrit par la suite pour la fabrication des ébauches de noeuds de liaison, à partir de fibres textiles préformables à chaud et à haute déformabilité, mises en place dans un moule de conformage. La mise en forme se réalise alors en une seule opération dans le moule de conformage, sous une faible dépression (par exemple, environ 0,7 bars) et une température modérée d'environ 100°C pendant 10 mn. On réalise ensuite le refroidissement sous vide de l'ébauche avant de démouler celle-ci.

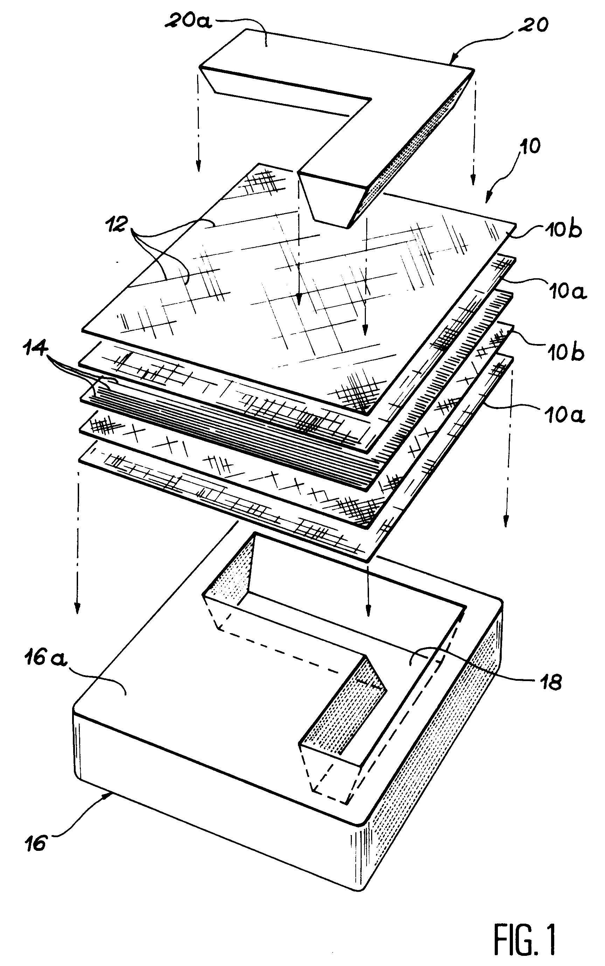

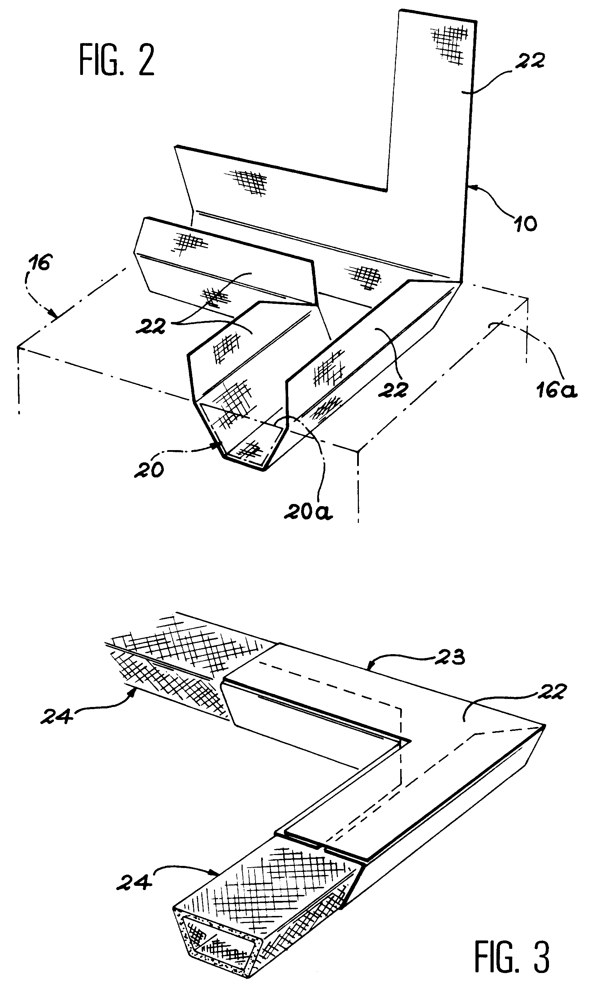

Par ailleurs, chacune des ébauches des noeuds de liaison est réalisée conformément à l'invention selon une technique particulière qui va à présent être décrite en détail en se référant notamment aux figures 1 et 2.

Cette technique repose sur l'utilisation de fibres textiles préformables à chaud et à haute déformabilité telles que les fibres tissées commercialisées par la Société BROCHIER S.A. sous l'appellation commerciale "INJECTEX" (Marque Déposée). Ces fibres, qui se présentent généralement sous la forme d'un tissu, sont le plus souvent des fibres de carbone, de verre, ou d'aramide. Des tissus hybrides d'aramide et de carbone ou de verre et de carbone peuvent aussi être utilisés. Comme on l'a déjà indiqué, de tels produits se caractérisent par le fait que les tissus ont subi un traitement chimique, de nature thermodurcissable et réactivable, qui facilite la manutention et la découpe, et autorise le préformage et l'assemblage. En particulier, l'utilisation de ces produits à très haute déformabilité permet de diminuer très fortement, voire de supprimer totalement les opérations de découpe locale des textiles standards pour le drapage de formes complexes. Des structures à surface non développable peuvent ainsi être obtenues.

Pour réaliser une ébauche de noeud de liaison, la première étape consiste à élaborer un complexe textile plan tel que celui qui est illustré en 10 sur la figure 1, à l'aide de fibres textiles préformables à chaud.

Ce complexe textile plan 10 est formé, de préférence, par la superposition d'au moins deux tissus 10a et 10b formés de fibres textiles 12 orientées selon des directions éventuellement différentes. Ainsi, les fibres 12 du tissu 10a peuvent être orientées à environ 0° et 90° par rapport à l'axe longitudinal de l'une des barres à relier, alors que les fibres 12 du tissu 10b peuvent être orientées à environ + 45° et - 45° par rapport à cet axe longitudinal.

Dans le cas où le complexe textile plan 10 comprend plus de deux couches de tissus (habituellement appelées "plis"), comme on l'a illustré sur la figure 1, les tissus du type 10a et/ou du type 10b sont empilés selon un ordre optimal prédéfini.

Lorsque la structure que l'on désire obtenir est appelée à subir des contraintes plus élevées, telles que des contraintes de traction, dans une direction particulière, on adjoint aux différentes couches constituant le complexe textile plan 10 une ou plusieurs séries de fibres textiles parallèles 14, placées par exemple entre les deux couches 10a et 10b lorsque le complexe textile ne comprend que ces deux couches, ou par exemple approximativement au milieu de l'empilement de couches dans le cas contraire. Les fibres textiles 14 sont des fibres textiles à hautes caractéristiques mécaniques et/ou élastiques, soit de même nature que les fibres 12 utilisées dans les couches 10a et 10b, soit de nature différente.

Il est important d'observer que les fibres 12 utilisées dans le complexe textile plan 10 ne présentent pas d'interruption, ni de coupe sur le revêtement périphérique du noeud de liaison. Ce complexe textile peut notamment avoir une forme sensiblement rectangulaire, dont les dimensions sont suffisantes pour permettre la réalisation de l'ébauche du noeud de liaison selon le procédé de l'invention.

Comme l'illustre schématiquement la figure 1, le complexe textile plan 10 est placé sur la face supérieure d'un moule de conformage 16, au-dessus d'une empreinte creuse 18 formée dans cette face supérieure et dont la forme non développable est complémentaire de la forme extérieure du noeud de liaison de la structure à réaliser. Dans l'exemple de réalisation illustré sur la figure 1, l'empreinte 18 a la forme d'un L dont les deux branches présentent une section uniforme et identique en forme de trapèze isocèle. On verra par la suite que de nombreuses autres formes peuvent être obtenues sans sortir du cadre de l'invention.

Un contre-moule ou noyau de moulage 20, dont la forme est complémentaire de celle de l'empreinte 18, est ensuite placé sur le complexe textile 10, de façon à emprisonner ce dernier dans l'empreinte 18, entre le moule 16 et le contre-moule 20. On applique alors fortement le contre-moule, afin d'enfermer les faces inférieures et latérales du complexe textile 10 entre le moule 16 et le contre-moule 20, de telle sorte que le complexe textile 10 épouse la forme non développable de l'empreinte 18 sans engendrer de plis.

Au cours d'une étape ultérieure du procédé, illustrée sur la figure 2, on procède à la découpe des parties du complexe textile 10 qui se trouvent alors situés au-dessus des faces supérieures apparentes 16a et 20a (figure 1) du moule 16 et du contre-moule 20. Cette découpe permet de former dans le complexe textile 10 des parties de recouvrement 22 aptes à être rabattues sur le contre-moule 20 pour fermer le noeud de liaison à réaliser. Cette découpe a également pour effet d'éliminer le surplus de tissu du complexe textile, en dehors de ces parties de recouvrement 22.

Au cours de l'opération de découpe du complexe textile, il est important d'observer qu'on doit prendre en compte la forme de la face supérieure apparente 20a du contre-moule 20, qui peut être plane comme l'illustrent les figures 1 et 2 ou de forme plus complexe.

Cette étape de découpe ultérieure peut avantageusement être supprimée à condition d'effectuer les découpes dans le complexe textile 10 avant sa mise en place au-dessus de l'empreinte creuse 18 formée dans la face supérieure du moule de conformage 16.

Lorsque les découpes existent, on rabat les différentes parties de recouvrement 22 sur la face apparente du contre-moule 20, en prenant soin d'interposer entre ces différentes parties un film séparateur préservant son intégrité jusqu'à une température au moins supérieure à la température de conformage. Il est à noter que la partie de recouvrement 22 qui est tournée vers l'extérieur lorsque toutes les parties de recouvrement ont été rabattues recouvre à elle seule la totalité de la face supérieure apparente 20a du contre-moule 20, comme l'illustre notamment la figure 3.

Lorsque cette dernière partie de recouvrement 22 a été rabattue, le moule est fermé de façon étanche ou au moyen d'une vessie dont les bords périphériques sont raccordés de façon étanche à la face supérieure du moule 16 ou à la face supérieure d'une platine (non représentée) supportant ce moule. Un circuit de vide est relié au moule étanche ou à la vessie, permettant d'établir une légère dépression, par exemple d'environ 0,7 bars, pendant la durée d'un cycle de préformage du complexe textile.

Pour exécuter ce cycle de préformage, l'ensemble de l'outillage est chauffé par des moyens internes ou disposé dans une presse chauffante ou encore placé dans une étuve et la température est élevée à environ 100°C pendant sensiblement 10 mn. Ce cycle de préformage permet de polymériser le matériau contenu dans les fibres à la suite du traitement chimique qu'elles ont subi lors de leur fabrication.

L'ébauche est ensuite refroidie, tout en maintenant la dépression partielle. Le démoulage de l'ébauche du noeud de liaison creux peut alors être effectué. On obtient ainsi une ébauche dans laquelle les différentes couches de tissus ont été assemblées les unes aux autres, sauf du côté de la face supérieure apparente du contre-moule 20, sur laquelle le collage a été empêché par le film séparateur. L'ébauche, qui est alors suffisamment rigide pour permettre sa manipulation et sa découpe éventuelle, présente a ce moment une forme identique à celle du noeud de liaison de la structure que l'on désire fabriquer.

A ce stade de la fabrication, on dispose donc d'une part d'ébauches de barres et, d'autre part, d'ébauches de noeuds de liaison creux, présentant les unes et les autres les formes finales des éléments correspondants de la structure que l'on désire réaliser.

Conformément à l'invention, on réalise à la fois l'assemblage de ces différentes ébauches et la matrice de résine thermodurcie de la structure au cours d'une unique opération de moulage par injection de résine thermodurcissable. Comme on l'a déjà indiqué, cette opération utilise la technique connue de moulage par injection de résine, ou technique RTM (de l'anglais "Resin Transfer Molding").

Pour effectuer cette opération, on place la ou les ébauches 23 de noeuds de liaison-creux et les ébauches de barres 24 dans un moule d'injection présentant la forme exacte de la structure que l'on désire réaliser, en prenant soin de faire pénétrer partiellement les extrémités des ébauches 24 des barres dans les ébauches 23 de noeuds de liaison creux et d'introduire éventuellement dans ces noeuds de liaison des noyaux de remplissage interne, fusibles ou non. Les différentes ébauches se trouvent alors dans la position représentée schématiquement sur la figure 3. Il est à noter que le moule d'injection peut être le même que le moule de conformage utilisé précédemment pour la fabrication des ébauches de noeuds de liaison creux.

On ferme ensuite le moule d'injection de façon étanche, par exemple au moyen d'une vessie dont les bords sont raccordés de façon étanche à la face supérieure du moule ou à la face supérieure d'une platine supportant celui-ci. La vessie d'étanchéité est reliée à un circuit de vide permettant d'appliquer sur la pièce une légère dépression, par exemple d'environ 5 mbars, pendant l'injection de la résine.

Après sa fermeture, le moule d'injection est par exemple placé dans une étuve et sa température est élevée jusqu'à environ 60°C. La résine thermodurcissable est alors injectée sous pression à l'intérieur du moule par un système d'injection de conception classique, sous une pression comprise entre environ 1 bar et environ 1,5 bar.

La résine utilisée pour former la matrice de la structure à fabriquer est une résine thermodurcissable, de préférence de type époxyde, ou encore de type bismaléide si l'on désire conférer à la structure obtenue un caractère autoextinguible.

Afin d'assurer la polymérisation ou la cuisson de la résine, on applique ensuite à la pièce un cycle de cuisson correspondant par exemple, pour une résine époxyde, à une température d'environ 85°C pendant sensiblement 1 heure. On refroidit ensuite le moule d'injection placé par exemple en étuve, jusqu'à une température maximale d'environ 40°C avant de démouler la structure.

Lorsque les ébauches de barres ont été obtenues par tissage de fibres textiles sur un noyau fusible, et/ou lorsque les noeuds de liaison comportent de tels noyaux fusibles, le démoulage de la structure peut être suivi d'une opération de post-cuisson de cette dernière, réalisée par exemple en étuve, à une température minimale d'environ 110°C pendant une durée sensiblement comprise entre 1 heure et 1 heure 30. Au cours de cette opération de post-cuisson, il se produit une fusion des noyaux qui sont progressivement détruits et disparaissent complètement. Afin d'assurer l'évacuation des noyaux fusibles, des évents judicieusement placés sont prévus dans le moule et dans la structure moulée.

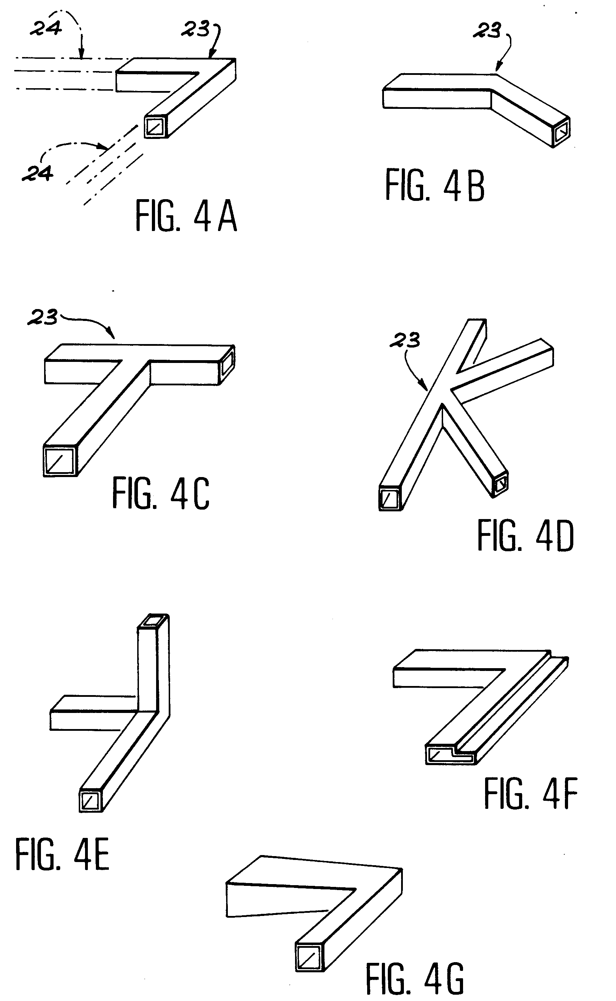

Comme l'illustrent notamment les figures 4A à 4G, le procédé de fabrication de structures en matériau composite qui vient d'être décrit en se référant aux figures 1 à 3 permet de fabriquer des liaisons de structures de type treillis présentant des formes très variables. Ainsi, un noeud de liaison creux ou non de la structure peut relier entre elles deux barres creuses ou non de même section et formant entre elles un angle droit (figure 4) ou quelconque (figure 4B). Comme l'illustre la figure 4C, un ou plusieurs noeuds de liaison de la structure obtenue peuvent aussi relier deux barres de même section pour former un T dont les branches peuvent, le cas échéant, être orientées selon un angle différent de 90°.

Un ou plusieurs noeuds de liaison de la structure obtenue peuvent également relier un nombre de barres supérieures à 2. Ces barres peuvent alors être soit situées dans un même plan pour former un K, comme l'illustre la figure 4D, ou dans un plan différent pour former un trièdre rectangle ou non, comme l'illustre la figure 4E.

En outre, on a montré sur la figure 4F qu'une ou plusieurs des barres reliées par un noeud de liaison de la structure peuvent présenter une section droite différente de celle des autres barres.

Par ailleurs, la figure 4G montre qu'une ou plusieurs des barres peuvent avoir une section évolutive. Bien que cela ne soit pas illustré, ce caractère évolutif peut se traduire par un aspect gauche et/ou vrillé des barres correspondantes.

De façon générale, les liaisons et les barres de la structure obtenue conformément à l'invention peuvent constituer toute structure tridimensionnelle complexe compatible avec l'utilisation envisagée.

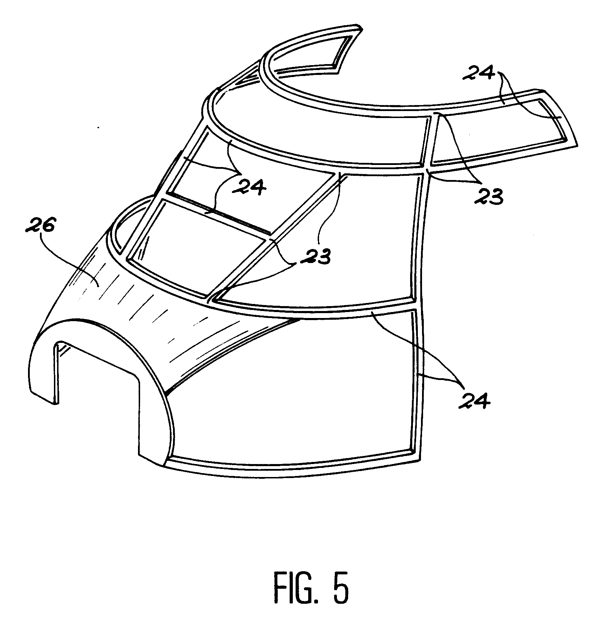

On a représenté à titre d'exemple sur la figure 5 une structure en forme de treillis, apte à être réalisée conformément à l'invention et correspondant à un châssis de verrière d'hélicoptère. Cette figure illustre également le fait que la structure conforme à l'invention peut comporter une peau 26, en matériau composite, travaillante ou non travaillante, incorporée au reste de la structure lors de l'opération de moulage par injection. Cette peau 26 obture une ou plusieurs des mailles formées entre les barres 24. Ses bords sont placés sur les ébauches 24 de barres et sur les ébauches 23 de noeuds de liaison avant la fermeture du moule d'injection. Lorsque la surface de la maille à obturer est géométriquement non développable, cette surface est préférentiellement réalisée sur la base d'un complexe textile préformable à haute déformabilité. L'injection de la résine, puis sa polymérisation concernent alors à la fois les barres, les noeuds de liaison, et la peau 26.

Le procédé de fabrication de structures en matériau composite selon l'invention, telles que des treillis tridimensionnels ou des éléments de treillis, permet d'obtenir simultanément un gain de masse, un coût de mise en oeuvre réduit, la suppression d'un certain nombre d'étapes d'assemblage indispensables dans les procédés existants, une bonne reproductibilité des formes, un bon état de surface, et des formes complexes.

## Revendications

1. Procédé de fabrication de liaisons en matériau composite, formées de fibres noyées dans une matrice de résine thermodurcie, de structures comportant au moins deux barres (24) reliées entre elles par au moins un noeud de liaison (10'), caractérisé par le fait qu'il comprend les étapes suivantes :
- réalisation de premières ébauches (24) de barres ;
- réalisation d'au moins une deuxième ébauche (23) de noeud de liaison creux, à la forme finale de ce noeud mais non imprégnée d'une résine d'assemblage auxdites barres, par :
• mise en place et compression d'un complexe textile plan (10) formé de fibres textiles tissées (12,14) préformables à chaud, entre une empreinte creuse (18) d'un moule de conformage (16) et un contre-moule (20) complémentaire de cette empreinte creuse ;
• rabattement de parties de recouvrement (22) du complexe textile sur le contre-moule, avec interposition d'un film séparateur entre les parties de recouvrement superposées, de façon à encercler totalement le contre-moule sans aucune ligne d'interruption ;
• fermeture étanche du moule et exécution d'un cycle de préformage du complexe textile (10) préservant l'intégrité du film séparateur, afin d'obtenir la deuxième ébauche (23) ;
• démoulage de cette deuxième ébauche ;
- assemblage des premières et deuxième ébauches (24,23), par moulage par injection de résine thermodurcissable.

2. Procédé selon la revendication 1, caractérisé par le fait qu'on réalise le complexe textile plan (10) en superposant au moins deux couches (10a,10b) de tissus de fibres textiles préformables à chaud, les fibres (12) de l'une (10a) de ces couches étant orientées à environ 0° et 90° par rapport à l'axe longitudinal de l'une des barres creuses, et les fibres (12) de l'autre couche (10b) étant orientées à environ + 45° et - 45° par rapport à cet axe longitudinal.

3. Procédé selon la revendication 2, caractérisé par le fait qu'on place au moins une série de fibres textiles parallèles (14), préformables à chaud, entre lesdites couches de tissus (10a,10b).

4. Procédé selon l'une quelconque des revendications précédentes, caractérisé par le fait qu'avant de rabattre les parties de recouvrement (22) du complexe textile (10), on découpe ce dernier pour éliminer des parties en surplus et pour donner aux parties de recouvrement des formes adaptées à celles d'une surface visible (20a) du contre-moule, à recouvrir par ces parties de recouvrement.

5. Procédé selon l'une quelconque des revendications précédentes, caractérisé par le fait que le cycle de préformage comprend une étape de chauffage à une température d'environ 100°C, sous une dépression d'environ 0,7 bar, pendant une durée voisine de 10 minutes, suivie d'une étape de refroidissement, en maintenant ladite dépression.

6. Procédé selon l'une quelconque des revendications précédentes, caractérisé par le fait qu'on réalise les premières ébauches (24) par tissage d'au moins trois ensembles de fibres textiles, orientés selon trois directions différentes, autour d'un noyau présentant extérieurement la forme intérieure de la barre à réaliser.

7. Procédé selon la revendication 6, caractérisé par le fait que ledit noyau est fusible et apte à être détruit lors de l'étape d'assemblage des ébauches.

8. Procédé selon l'une quelconque des revendications 6 et 7, caractérisé par le fait que les trois directions différentes sont orientées à environ - 45°, 0° et + 45° par rapport à un axe longitudinal du noyau fusible.

9. Procédé selon l'une quelconque des revendications 1 à 5, caractérisé par le fait qu'on réalise les premières ébauches (24) à partir d'un autre complexe textile plan formé de fibres textiles préformables à chaud, selon un procédé identique à celui permettant de réaliser la deuxième ébauche (23).

10. Procédé selon l'une quelconque des revendications précédentes, caractérisé par le fait que l'étape d'assemblage des premières (24) et deuxième (23) ébauches consiste à :
- placer ces ébauches dans un moule d'injection et disposer un noyau dans les ébauches des noeuds de liaison ;
- fermer le moule d'injection et le chauffer à une température d'injection, tout en y créant une dépression ;
- injecter sous pression la résine thermodurcissable ;
- appliquer un cycle de cuisson permettant de polymériser la résine ;
- démouler la structure ainsi obtenue, après refroidissement du moule d'injection.

11. Procédé selon la revendication 10, caractérisé par le fait que ledit noyau disposé dans les ébauches des noeuds de liaison est fusible et apte à être détruit lors de ladite étape d'assemblage des ébauches.

12. Procédé selon l'une quelconque des revendication 10 et 11, caractérisé par le fait que, lors de l'étape d'assemblage :
- on chauffe le moule d'injection à une température d'environ 60°C, tout en y créant une dépression d'environ 5 mbars ;
- on injecte une résine époxyde sous une pression comprise entre environ 1 bar et environ 1,5 bar ;
- on applique un cycle de cuisson à une température d'environ 85°C pendant environ 1 heure ;
- on refroidit le moule d'injection en étuve, jusqu'à une température maximale d'environ 40°C, avant de démouler la structure.

13. Procédé selon les revendications 7 et 11 combinées, caractérisé par le fait que l'étape d'assemblage comprend, après démoulage de la structure, la réalisation d'une post-cuisson de cette dernière à une température de fusion des noyaux fusibles afin de détruire totalement ces derniers.

14. Procédé selon la revendication 13, caractérisé par le fait que la post-cuisson de la structure est réalisée en étuve, à une température minimale d'environ 110°C, pendant une durée comprise entre environ 1 heure et environ 1 heure 30.

15. Procédé selon l'une quelconque des revendications 10 à 14, caractérisé par le fait qu'on utilise le moule de conformage comme moule d'injection.

16. Procédé selon l'une quelconque des revendications précédentes, caractérisé par le fait que, lors de l'étape d'assemblage, on utilise une résine thermodurcissable bismaléide.

17. Procédé selon l'une quelconque des revendications précédentes, caractérisé par le fait que, en vue de fabriquer des structures en treillis dans lesquelles des barres (24) reliées par des noeuds de liaison (23) forment des mailles dont l'une au moins est obturée par une peau (26) en fibres textiles noyées dans une matrice de résine thermodurcie, on assemble simultanément les fibres textiles de ladite peau et les premières et deuxième ébauches lors de l'opération de moulage par injection de résine thermodurcissable.

18. Treillis en matériau composite, caractérisé par le fait qu'il comprend un ensemble de structures comportant chacune aux moins deux barres (24) reliées entre elles par au moins un noeud de liaison (23) incluant un complexe textile plan (10), comprimé, formé de fibres textiles tissées (12,14), ce complexe textile comprenant des parties de recouvrement rabattues (22) un film séparateur, dont l'intégrité est préservée, étant interposé entre les parties de recouvrement superposées, cet ensemble de structures étant fabriqué par le procédé de fabrication selon l'une quelconque des revendications précédentes.

19. Treillis selon la revendication 18, caractérisé par le fait que les barres (24) formant entre elles des mailles, l'une au moins de ces mailles est obturée par une peau (26) réalisée en fibres textiles noyées dans une matrice de résine thermodurcie.

## Claims

1. Process for the production of composite material connections, formed from fibres embedded in a thermoset resin matrix, for structures having at least two bars (24) interconnected by at least one connecting joint (10') and comprising the following stages:
producing first blanks (24) of the bars,
producing at least one second blank (23) of a hollow connecting joint with the final shape of said joint, but not impregnated with a resin for the assembly with said bars by:
- putting into place and compression of a planar textile complex (10) formed from hot preformable woven textile fibres (12, 14), between a hollow cavity (18) of a shaping mould (16) and a countermould (20) complimentary to said hollow cavity,
- folding down the overlap portions (22) of the textile complex onto the countermould, with the interposing of a separating film between the super-imposed overlap portions, so as to completely encircle the countermould without any interruption line,
- tight sealing of the mould and performance of a performing cycle of the textile complex (10) maintaining the integrity of the separating film in order to obtain the second blank (23),
- demoulding said second blank,
assembly of the first and second blanks (24, 23) by thermosetting resin transfer moulding.

2. Process according to claim 1, characterized in that the planar textile complex (10) produced by superimposing at least two layers (10a, 10b) of hot preformable textile fibre fabrics, the fibres (12) of one (10a) of these layers being oriented to approximately 0° and 90° with respect to the longitudinal axis of one of the hollow bars, and the fibres (12) of the other layer (10b) are oriented to approximately +45° and -45° with respect to said longitudinal axis.

3. Process according to claim 2, characterized in that at least one series of hot preformable, parallel textile fibres (14) are placed between said fabric layers (10a, 10b).

4. Process according to any one of the preceding claims, characterized in that prior to folding down the overlap portions (22) of the textile complex (10), the latter is cut in order to eliminate surplus portions and give the overlap portions shapes appropriate to those of a visible surface (20a) of the countermould and which is to be covered by said overlap portions.

5. Process according to any one of the preceding claims, characterized in that the preforming cycle comprises a stage of heating to a temperature of approximately 100°C, under a vacuum of approximately 0.7 bar, for a time of approximately 10 minutes, followed by a cooling stage, whilst maintaining the said vacuum.

6. Process according to any one of the preceding claims, characterized in that the first blanks (24) are produced by weaving at least three groups of textile fibres oriented in three different directions about a core having externally the internal shape of the bar to be produced.

7. Process according to claim 6, characterized in that the said core is meltable and can be destroyed during the assembly stage of the blanks.

8. Process according to any one of the preceding claims, characterized in that the three different directions are oriented at approximately -45°, 0° and +45° with respect to a longitudinal axis of the meltable core.

9. Process according to any one of the claims 1 to 5, characterized in that the first blanks (24) are produced from another planar textile complex formed from hot preformable textile fibres, in accordance with a process identical to that making it possible to produce the second blank (23).

10. Process according to any one of the preceding claims, characterized in that the assembly stage for the first (24) and second (23) blanks consists of placing these blanks in an injection mould and placing a core in the blanks of the connecting joints, sealing the injection mould and heating it to an injection temperature, whilst creating a vacuum therein, injecting the thermosetting resin under pressure, applying a baking cycle permitting the polymerization of the resin and demoulding the thus obtained structure after cooling the injection mould.

11. Process according to claim 10, characterized in that the said core placed in the blanks of the connecting joints is meltable and can be destroyed during said blank assembly stage.

12. Process according to claim 10 or 11, characterized in that, during the assembly stage, the injection mould is heated to a temperature of approximately 60°C, whilst creating therein a vacuum of approximately 5 mbars, an epoxy resin is injected under a pressure between approximately 1 bar and approximately 1.5 bar, a baking cycle at a temperature of approximately 85°C is applied for approximately 1 hour and the injection mould is cooled in the oven up to a maximum temperature of approximately 40°C before demoulding the structure.

13. Process according to claims 7 and 11, characterized in that the assembly stage comprises, following the demoulding of the structure, the performance of a post-baking of the latter at a melting temperature of the meltable cores in order to completely destroy the latter.

14. Process according to claim 13, characterized in that the post-baking of the structure is performed in the oven, at a minimum temperature of approximately 110°C and for a time between approximately 60 and 90 minutes.

15. Process according to any one of the claims 10 to 14, characterized in that the shaping mould is used as the injection mould.

16. Process according to any one of the preceding claims, characterized in that a bismaleide thermosetting resin is used during the assembly stage.

17. Process according to any one of the preceding claims, characterized in that, with a view to producing lattice structures in which the bars (24) connected by the connecting joints (23) form meshes, whereof at least one is sealed by a skin (26) of textile fibres embedded in a thermoset resin matrix, simultaneous assembly takes place of the textile fibres of said skin and the first and second blanks during the thermosetting resin transfer moulding operation.

18. Composite material lattice, characterized in that it comprises an assembly of structures, each of which has at least two bars (24) interconnected by at least one connecting joint (23) including a planar, compressed, textile complex (11), formed from woven textile fibres (12, 14), said textile complex incorporating turned down overlap portions (22), a separating film, whose integrity is preserved, being interposed between the superimposed overlap portions, said assembly of structures being manufactured by the manufacturing process according to any one of the preceding claims.

19. Lattice according to claim 18, characterized in that the bars (24) form between them meshes, at least one of the meshes being sealed by a skin (26) formed from textile fibres embedded in a thermoset resin matrix.

## Patentansprüche

1. Verfahren zur Herstellung von Verbindungen aus Verbundmaterial, die aus Fasern bestehen, welche in eine hitzegehärtete Harzmatrize eingelassen sind, und aus Strukturen bestehen, die mindestens zwei Streben (24) aufweisen, die miteinander durch mindestens einen Verbindungsknoten (10') verbunden sind, dadurch gekennzeichnet, daß das Verfahren die folgenden Abschnitte umfaßt:
- Herstellung von ersten Strebenrohlingen (24);
- Herstellung von mindestens einem zweiten Rohling (23) eines hohlen Verbindungsknotens in der endgültigen Form dieses Knotens, der nicht mit Harz zur Verbindung der genannten Streben imprägniert ist, durch:
- durch Einsatz und Pressung eines ebenen Textilkomplexes (10), der aus verwebten. zuvor wärmebehandelten Textilfasern (12,14) besteht, zwischen einem hohlen Abdruck (18) einer Anpassungspreßform (16) und einer Gegenpreßform (20), die das Gegenstück zu diesem hohlen Abdruck bildet;
- Umklappen der Abdeckbereiche (22) des Textilkomplexes auf die Gegenpreßform, wobei eine Trennfolie zwischen die sich überlagernden Abdeckbereiche in der Weise eingelegt wird, daß diese Gegenpreßform ohne eine Unterbrechungslinie vollkommen umhüllt wird;
- dichtes Verschließen der Form und Durchführung eines Zyklus zur Vorverformung des Textilkomplexes (10), wobei die Unversehrtheit der Trennfolie bewahrt wird, um den zweiten Rohling (23) zu erhalten;
- Herausnehmen dieses zweiten Rohlings aus der Form;
- Verbindung des ersten und zweiten Rohlings (24,23) durch Spritzgießen von warmhärtenden Harz.

2. Verfahren nach Anspruch 1, dadurch gekennzeichnet, daß der ebene Textilkomplex (10) durch Übereinanderlagerung von mindestens zwei Lagen (10a, 10b) aus einem wärmevorbehandelten Textilfasergewebe hergestellt wird, wobei die Fasern (12) der einen (10a) dieser Lagen im Winkel von 0° und 90° in bezug auf die Längsachse der einen der hohlen Streben ausgerichtet sind, während die Fasern (12) der anderen Lage (10b) etwa im Winkel von +45° und -45° in bezug auf diese Längsachse ausgerichtet sind.

3. Verfahren nach Anspruch 2, dadurch gekennzeichnet, daß mindestens eine Reihe wärmevorbehandelten, parallelen Textilfasern (14) zwischen den genannten Gewebelagen (10a,10b) eingelagert wird.

4. Verfahren nach einem beliebigen der vorangegangenen Ansprüche, dadurch gekennzeichnet, daß vor dem Umklappen der Abdeckbereiche (22) des Textilkomplexes (10) letzterer abgeschnitten wird, um überschüssige Teile zu entfernen und um den Abdeckbereichen eine Form zu geben, die an die Form einer sichtbaren Oberfläche (20a) der Gegenpreßform angepaßt sind, die durch diese Abdeckbereiche abgedeckt werden soll.

5. Verfahren nach einem beliebigen der vorangegangenen Ansprüche, dadurch gekennzeichnet, daß der Vorverformungszyklus einen Arbeitsgang enthält, bei dem eine Erwärmung auf etwa 100°C bei einem Unterdruck von etwa 0,7 bar stattfindet, und zwar etwa 10 Minuten lang, worauf eine Abkühlungszeit folgt, während der der genannten Unterdruck beibehalten wird.

6. Verfahren nach einem beliebigen der vorangegangenen Ansprüche, dadurch gekennzeichnet, daß die ersten Rohlinge (24) durch Verwebung von mindestens drei Textilfaserkomplexen hergestellt werden, wobei diese Fasern um einen Kern herum, der nach außen hin die innere Form der herzustellenden Strebe verkörpert, in drei unterschiedliche Richtungen ausgerichtet sind.

7. Verfahren nach Anspruch 6, dadurch gekennzeichnet, daß der genannte Kern schmelzbar ist und während des Arbeitsganges der Verbindung der Rohlinge zerstört werden kann.

8. Verfahren nach einem beliebigen der Ansprüche 6 und 7, dadurch gekennzeichnet, daß die drei unterschiedlichen Richtungen in den Winkeln von etwa -45°, 0° und +45°in bezug auf die Längsachse der schmelzbaren Kerns ausgerichtet sind.

9. Verfahren nach einem beliebigen der Ansprüche 1 bis 5, dadurch gekennzeichnet, daß die ersten Rohlinge (24) ausgehend von einem anderen ebenen Textilkomplex hergestellt werden, der aus wärmevorbehandelten Textilfasern nach einem Verfahren gebildet wird, das mit dem Verfahren, nach dem der zweite Rohling (23) hergestellt wird, identisch ist.

10. Verfahren nach einem beliebigen der vorangegangenen Ansprüche, dadurch gekennzeichnet, daß der Arbeitsgang der Verbindung der ersten (24) und des zweiten Rohlings (23) wie folgt abläuft:
- Einsatz dieser Rohlinge in eine Spritzgußform und Anordnung eines Kerns in diesen Rohlingen der Verbindungsknoten;
- Verschließen der Spritzgußform und Erhitzung auf die Einspritztemperatur unter Erzeugung eines Unterdruckes;
- Einspritzung des wärmehärtenden Harzes unter Druck;
- Anwendung eines Brennzyklusses, infolgedessen das Harz polimerisiert;
- Herausnehmen der erhaltenen Struktur aus der Form nach Abkühlung der Spritzgußform.

11. Verfahren nach Anspruch 10, dadurch gekennzeichnet, daß der genannte Kerns, der in diesen Rohlingen der Verbindungsknoten angeordnet wurde, schmelzbar ist und während des Arbeitsganges der Verbindung dieser Rohlinge zerstört werden kann.

12. Verfahren nach einem beliebigen der Ansprüche 1 bis 5, dadurch gekennzeichnet, daß während des Arbeitsganges der Verbindung:
- die Spritzgußform auf eine Temperatur von etwa 60° unter Erzeugung eines Unterdruckes von etwa 5 mbar erwärmt wird;
- ein Expoxy-Harz unter einem Druck zwischen ca. 1 bar und ca. 1,5 bar eingespritzt wird;
- ein Brennzyklus bei einer Temperatur von etwa 85°C für die Dauer von etwa 1 Stunde angewendet wird;
- die Spritzgußform im Trockenofen bis auf eine max. Temperatur von 40°C abgekühlt wird. bevor man die Struktur aus der Form nimmt.

13. Verfahren nach den Ansprüche 7 und 11 zusammen, dadurch gekennzeichnet, daß der Arbeitsgang der Verbindung, nachdem die Struktur aus der Form genommen wurde, eine Nachbrennung dieser Struktur bei der Schmelztemperatur der schmelzbaren Kerne umfaßt, um letztere vollkommen aufzulösen.

14. Verfahren nach Anspruch 13, dadurch gekennzeichnet, daß der Nachbrennvorgang dieser Struktur im Trockenofen bei einer Mindesttemperatur von ca. 110°C über einen Zeitraum zwischen 1 Stunde und 1,5 Stunden erfolgt.

15. Verfahren nach einem beliebigen der Ansprüche 10 bis 14, dadurch gekennzeichnet, daß als Spritzform eine Anpassungsform verwendet wird.

16. Verfahren nach einem beliebigen der vorangegangenen Ansprüche, dadurch gekennzeichnet, daß für den Arbeitsgang der Verbindung ein wärmehärtendes, bismaleides Harz verwendet wird.

17. Verfahren nach einem beliebigen der vorangegangenen Ansprüche, dadurch gekennzeichnet, daß hinsichtlich der Herstellung von fachwerkartigen Konstruktionen, bei denen die Streben (24), die durch Verbindungsknoten (23) miteinander verbunden sind, Maschen bilden, von denen mindestens eine von einer Haut (26) aus Textilfasern überzogen ist, die in eine wärmehärtende Matrize aus Harz eingelassen sind, die Textilfasern der genannten Haut und die ersten Rohlinge und der zweite Rohling während des Spritzgußvorganges mit wärmehärtendem Harz gleichzeitig miteinander verbunden werden.

18. Fachwerkartige Struktur aus Verbundmaterial, dadurch gekennzeichnet, daß diese einen Komplex von Strukturen umfaßt, von denen jede mindestens zwei Streben (24) enthält, die miteinander durch mindestens einen Verbindungsknoten (23) verbunden sind, und einen komprimierten, aus verwobenen Textilfasern (12,14) gebildeten, ebenen Textilfaserkomplex (10) beinhalten, wobei dieser Textilfaserkomplex mit einer Trennfolie versehene, umgeklappte Abdeckbereiche (22) umfaßt, deren Unversehrtheit bewahrt wird, wobei sich diese Trennfolie zwischen den übereinanderliegenden Abdeckbereichen befindet und dieser Strukturkomplex entsprechend einem Herstellungsverfahren nach einem beliebigen der vorangegangenen Ansprüche hergestellt wird.

19. Fachwerkartige Struktur nach Anspruch 18, dadurch gekennzeichnet, daß die Streben (24) untereinander Maschen bilden, wobei mindestens eine dieser Maschen von einer Haut (26) überzogen wird, die aus in eine Matrize aus wärmehärtendem Harz eingelassenen Textilfasern hergestellt wird.
